# EUROPEAN PATENT SPECIFICATION

(11) **EP 2 244 531 B1**
(45) Date of publication and mention of the grant of the patent: **12.10.2016**
(21) Application number: 09014557.4
(22) Date of filing: 23.11.2009
(51) Int. Cl.: H05B 33/08

(54) **Lighting device**
Beleuchtungsvorrichtung
Dispositif d'éclairage

(30) Priority: 25.11.2008 JP 2008300167
(43) Date of publication of application: 27.10.2010
(73) Proprietor: Panasonic Intellectual Property Management Co., Ltd., Osaka 540-6207 (JP)
(72) Inventor: Nagase, Haruo, Nara (JP); Takashi, Kambara, Osaka (JP)
(74) Representative: Rüger, Barthelt & Abel

(56) References cited:
- EP-A1- 2 204 856
- JP-A- 2006 210 272
- JP-A- 2008 130 377

## Description

### [Field of the Invention]

The present invention relates to a lighting device for lighting a light emitting diode (referred to as LED hereinafter).

### [Background Art]

Mass production of LED has been extensively developed with the advance in LED with higher luminance in recent years. An LED is provided with an LED chip which emits blue light and a color conversion part including translucent materials (e.g. such as epoxy resin and silicone resin) including a phosphor by which the LED chip is covered and light serving as a complementary color is emitted through absorption of light emitted from the LED chip. LED has purposes diversified in accordance with the emergence of LED which are capable of emitting white light (i.e. so-called white LED). LED has advantages such as longer life, excellent responsiveness, and compact a configuration in comparison with incandescent lamps. Therefore, illumination using an LED can be realized in a small configuration with light weight, enabling formation of a thin and three-dimensional illumination fixture as a whole, so that there are advantages such as enhancing a degree of freedom in the design including illumination fixtures. Furthermore, light with a desired color can be obtained corresponding to a purpose without using color filters.

With the development of LED which is capable of replacing incandescent lamps and fluorescent lamps and realize light emission with high luminance in a high output, there have been developments in the field of vehicles by including not only room lamps for vehicles and daytime running lamps for vehicle visibility improvement in daytime or other lamps but also headlights.

Meanwhile, LED exhibits luminance which is decreased by a temperature rise resulting from self-heating by lighting. Therefore, as a lighting device for use in lighting of the LED, there is proposed a lighting device which maintains constant luminance by controlling a current flowing into the LED in accordance with lighting time of the LED (e.g. refer to JP 2007-118847 A).

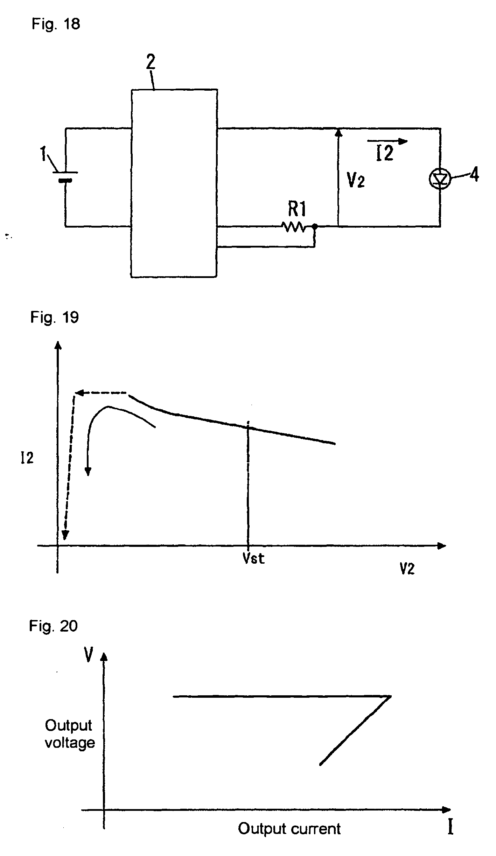

Such a lighting device to light the LED is, for example, as shown in Fig. 18, including a DC/DC converter 2 as current control means adapted to control a current supplied from a DC power source 1 to an LED 4, wherein an output from the DC/DC converter 2 is subjected to a feedback control so that a current I2 detected by a resistor R1 which is connected in series with the LED 4 and provided for current detection is brought into a substantially constant state.

However, this configuration is accompanied by a feedback control which is performed for an output from the DC/DC converter 2 so as to increase the amount of a current flowing into the LED 4 not only in the case of compensation for a voltage decrease resulting from self-heating of the LED 4 but also in the case of dealing with a decrease of a forward direction voltage Vf of the LED 4 due to a short circuit of the LED 4 or other reasons. Therefore, if the LED 4 is out of order and short-circuited due to some reasons, a larger amount of a current will continuously flow into the LED 4.

Usually, the LED 4 is provided with an LED chip using compound semiconductor materials (e.g. InGaN-based and A1InGaP-based materials) to be fixed on a substrate by adhesives such as solder and resin. Moreover, for electrical connection between the LED chip and a circuit pattern of an external substrate circuit, a conductor pattern arranged on the substrate and an electrode of the LED chip are electrically connected to each other by an electrical connection member such as a solder and a metal wire. Furthermore, the LED chip, the electrical connection member, the substrate, or other components are electrically and mechanically protected by covering them with a cover made of, for example, resin or glass directly or with air or the like interposed therebetween. An illumination device having such LED 4 as a light source is configured so that the LED 4 is arranged and fixed inside a lamp and fixture of a cassis covered with translucent glass, plastic, and the like in the front.

The LED 4 with a high output uses a plurality of LED chips each having a chip size of several hundreds µm square (e.g. 300µm square) in serial connection or uses an LED chip with a large area equal to or more than 1mm square, wherein enlargement is achieved with a current of several hundreds mA to several A flowing therein.

Therefore, a short circuit occurring in the LED 4 with a high output will result in having a large heating value with a sharp temperature rise, followed by not only simply turning off the LED 4 but also causing other problems. A short circuit of the LED chip causes local overheat due to current concentration or other reasons, and the heat causes thermal expansion of air included in the LED 4 and/or sharp thermal expansion in the case of evaporation of water included in a resin which may be used for an adhesive, cover or other parts, whereby the LED 4 may be possibly damaged. In such cases, a short circuit of the LED 4 is accompanied by the falling of components which constitute the LED 4 (such as an LED chip, adhesive, a substrate and a cover) on a lamp and fixture of an illumination device, internally contaminating and/or damaging the lamp and fixture, and possibly hindering the reuse of the illumination device.

Particularly because the LED 4 with a high output often uses solder in place of a metal wire as an electrical connection material, the LED 4 tends to be damaged by a short circuit rather than opening resulting from disconnection of a metal wire. Moreover, a short circuit of the LED 4 not only causes a complete short circuit but also complicates a degree of a decrease of the forward direction voltage Vf.

Fig. 19 shows the current I2 which flows into the LED 4 when the DC/DC converter 2 is subjected to the feedback control so as to realize constant luminance of the LED 4, in relation to the voltage V2 between both ends of the LED 4 (i.e. current/voltage characteristics of the LED 4) in the lighting device of Fig. 18, exemplifying a current/voltage locus observed when the LED 4 is short-circuited. Note that Fig. 19 shows a normal lighting state of the LED 4 when the voltage V2 between both ends of the LED 4 is higher than a voltage Vst.

Usually, lighting of the LED 4 is followed by a gradual decrease of the forward direction voltage Vf associated with a temperature rise resulting from self heating of the LED 4, and luminance of the LED 4 is accordingly decreased. In compensation for the luminance decrease of the LED 4, a feedback control is performed to increase the current I2 supplied to the LED 4 so as to increase the luminance of the LED 4, wherein current/voltage characteristics are observed as shown by a solid line in Fig. 19. Here, when the LED 4 is short-circuited, the current I2 which continuously flows along with a decrease of the forward direction voltage Vf of the LED 4 finally reaches zero as shown by a broken line in Fig. 19. As a result, a short circuit of the LED 4 is accompanied by a longer period of time for an overcurrent to flow into the LED 4 with an increased heating value of the LED 4, whereby a damage of the LED 4 may possibly cause a large scale of contamination, impairment, or other problems in an illumination fixture.

Meanwhile, it is also possible to consider stopping the above lighting device by using a fuse or other means. However, this case is realized on the assumption that a current is stopped after the LED 4 is short-circuited with a temperature rise in an LED chip or other components, which means protection of the lighting device can be achieved without sufficiently preventing contamination and impairment in the lamp and fixture or other components due to a damage of the LED 4.

There is also proposed a power conversion device capable of obtaining desired output power from inputted power, wherein a switching power source using a switching element for power conversion and adjustment is employed and the switching power source is protected from an overcurrent and overpower by a constant voltage control (e.g. refer to JP 2004-215394 A). An output characteristic of such power conversion device shows a chevron-shaped characteristic as shown in Fig. 20 wherein an output voltage V is usually constant and a current is decreased when an output current I falls in a predetermined value or higher (i.e. overcurrent).

A lighting device shown in JP 2008-130377 A is provided with current control means adapted to control a current supplied from a power source to an LED, the lighting device comprising: voltage detection means capable of detecting a voltage between both ends of the LED; an LED current restriction part capable of restricting a current flowing into the LED having a switch connected in series th the LED; and an output voltage determination part for controlling the LED current restriction part so as to restrict a current flowing into the LED upon determination that a voltage detected by the voltage detection means is equal to or less than a predetermined value defined for determination of a short circuit in the LED.

JP 2006-6210272 A and EP 2 204 856 A1 also show lighting devices provided with current control means adapted to control a current supplied from a power source to an LED.

### [Disclosure of the Invention]

### [Problems to be solved by the Invention]

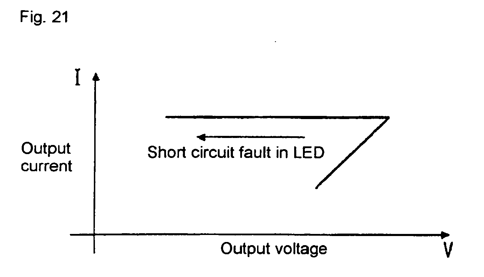

In preventing the LED 4 from being damaged by applying such switching power source to a lighting device for the LED 4, it is proposed to use current control means for a constant current driving control because the LED 4 does not usually require a high voltage and luminance control by a current is easier to carry out. Therefore, an output characteristic of the current control means using a constant current driving control are exemplified as shown in Fig. 21, wherein an output current I is usually constant and decreased when an output voltage V reaches a predetermined value or higher. However, if the LED 4 has a short circuit failure, the constant current control causes a voltage decrease, leaving a problem that a current flowing into the LED 4 cannot be reduced even if the voltage V2 between both ends of the LED 4 is decreased due to a short circuit of the LED 4.

The present invention was achieved by taking the above problems into consideration, having an object to provide a lighting device capable of preventing LED from being damaged in a short circuit failure of the LED.

### [Means adapted to solve the Problems]

According to the present invention, a lighting device includes current control means adapted to control a current supplied from a power source to an LED, wherein the lighting device includes voltage detection means capable of detecting a voltage between both ends of the LED, an LED current restriction part capable of restricting a current flowing into the LED, and an output voltage determination part for controlling the LED current restriction part so as to restrict a current flowing into the LED when a voltage detected by the voltage detection means is equal to or less than a predetermined value defined for short circuit determination for the LED.

According to this aspect, if a voltage detected by the voltage detection means is equal to or less than a predetermined value defined for short circuit determination for the LED, the output voltage determination part determines the LED is short-circuited to restrict a current supplied to the LED, whereby an overcurrent is not continuously flowed into the LED. The lighting device is therefore capable of preventing a damage of LED associated with a temperature rise occurring when the LED has a short circuit failure.

According to the present invention the LED current restriction part has a current limiting resistor connected in parallel with the switching element.

According to this aspect, even if the LED is short-circuited, a restricted current can be continuously made to flow while preventing the LED from being damaged. Particularly when a plurality of LEDs are connected in series, lighting of LEDs which are not short-circuited can be maintained while preventing short-circuited LEDs from being damaged. Therefore, not-lighting the entire LEDs can be avoided while showing the LEDs are partially short-circuited.

According to the present invention, the LED current restriction part is a switching element connected in series between the power source and the LED.

According to this aspect, a current flowing into the LED is restricted by the switching element connected in series with the LED, so that a period of time for an overcurrent to flow into the LED in a short circuit state thereof can be made shorter by a relatively simple configuration.

According to a further aspect of the present invention, the predetermined value corresponds to a value in a range from 1/3 times to 5/9 times a normal voltage between both ends of the LED.

According to this further aspect, the predetermined value is established within a range from 1/3 times to 5/9 times a normal voltage between both ends of the LED as a reference, and if a voltage is equal to or less than the predetermined value in this specific range, the output voltage determination part spuriously determines the LED is short-circuited. It should be noted in particular that a voltage lower than 1/3 times a normal voltage between both ends of the LED will result in a longer period of time for an overcurrent to flow into the short-circuited LED, whereas a voltage higher than 5/9 times a normal voltage between both ends thereof will result in larger variations of a voltage between both ends of the LED due to deterioration of the LED with the elapse of time and manufacturing variations among the LEDs, wherein malfunction of the output voltage determination part may be possibly observed. However, these problems can be effectively prevented.

According to a further aspect of the present invention, the output voltage determination part controls the LED current restriction part so as to restrict a current flowing into the LED by determining a short circuit of the LED if a voltage detected by the voltage detection means is equal to or less than the predetermined value and the voltage is decreasing.

According to this further aspect, a current flowing into the LED can be restricted even if a current is made to flow again from the power source to the LED after observing a short circuit of the LED.

According to a further aspect of the present invention, the current control means is a converter to control a current supplied to the LED by a switching element, and the LED current restriction part restricts a current flowing into the LED by using both the switching element in the current control means and a switching element connected in series between the power source and the LED.

According to this further aspect, a current supplied to the LED can be restricted by using both the switching element connected in series with the LED and the switching element arranged in the current control means, thereby making it possible to prevent the LED from being damaged while protecting the lighting device when the LED is short-circuited.

According to a further aspect of the present, the power source is a DC power source, and the current control means is a DC/DC converter using a step-up circuit.

According to this further aspect, even if the DC power source serving as the power source has a low output, a higher voltage than a voltage of the DC power source can be generated, whereby the lighting device can be provided with large power to allow serial connection of a larger number of LEDs.

According to a further aspect of the present invention, the power source is a DC power source and the current control means is a DC/DC converter using a flyback transformer.

According to this aspect, even if the DC power source has a low output, a higher voltage than a voltage of the DC power source can be generated, whereby the lighting device can be provided with large power to allow serial connection of a larger number of LEDs.

### [Effect of the Invention]

According to the present invention, the lighting device is provided with the output voltage determination part for controlling the LED current restriction part so as to restrict a current flowing into the LED if a voltage detected by the voltage detection means, which is capable of detecting a voltage between both ends of the LED, is equal to or less than a predetermined value defined for short circuit determination for the LED, wherein if a voltage detected by the voltage detection means is decreased to be lower than the predetermined value defined for short circuit determination, a short circuit of the LED is determined to restrict a current flowing into the LED, so that an overcurrent is not continuously made to flow into the LED. The lighting device is therefore capable of preventing LED from being damaged when the LED has a short circuit fault.

### [Best Mode for Carrying Out the Invention]

### (First conventional embodiment)

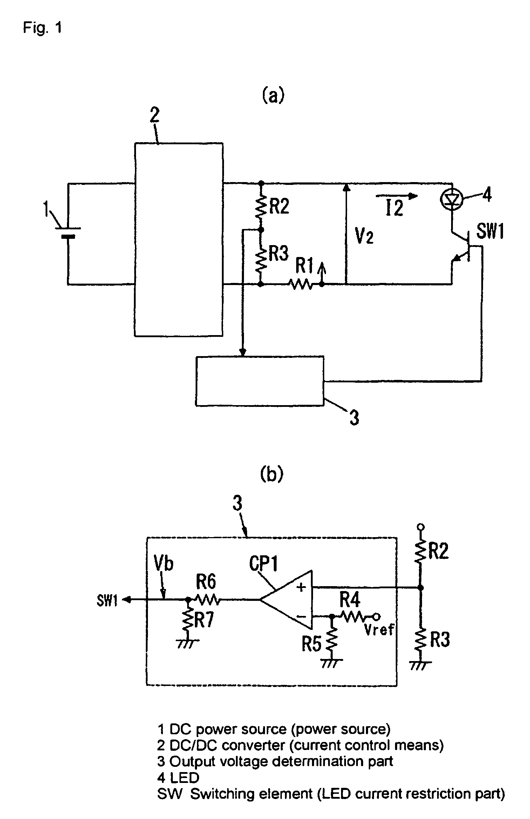

Hereinafter, a lighting device according to the present conventional embodiment will be described referring to Figs. 1 to 4.

The lighting device according to the present conventional embodiment is as shown in Fig. 1a, including a DC/DC converter 2 as current control means adapted to control a current supplied from a DC power source 1 serving as a power source to an LED 4. Connected between output terminals of the DC/DC converter 2 is a series circuit including the LED 4, a switching element SW1 made of a transistor, and a resistor R1 preferably arranged for current detection, wherein the switching element SW1 constitutes an LED current restriction part for restricting a current flowing into the LED 4. Also connected between output terminals of the DC/DC converter 2 in the lighting device according to the present conventional embodiment is voltage detection means which includes a series circuit including a voltage dividing resistor R2 and a voltage dividing resistor R3 and capable of detecting a voltage V2 between both ends of the LED 4. The lighting device according to the present conventional embodiment also has an output voltage determination part 3 for controlling the switching element SW1 serving as the LED current restriction part so as to restrict a current flowing into the LED 4 by comparing a voltage detected by the voltage detection means to a predetermined value defined in advance for short circuit determination for the LED 4, and if the aforementioned detected value is equal to or less than the predetermined value. Note that the LED 4 is a white LED with a high output using GaN-based materials.

The output voltage determination part 3, as shown in Fig. 1b, has a comparator CP1 with a non-inverted input terminal connected to a connection point of the voltage dividing resistors R2 and R3 in the aforementioned voltage detection means. Therefore, a voltage detected by the voltage detection means is inputted to the non-inverted input terminal of the comparator CP1. Also connected to an inverted input terminal of the comparator CP1 is a connection point of a voltage dividing resistor R4 for dividing a reference voltage Vref and a voltage dividing resistor R5. Therefore, a predetermined value defined for short circuit determination for the LED 4 is inputted to the inverted input terminal of the comparator CP1. An output from the comparator CP1 is divided by a voltage dividing resistor R6 and a voltage dividing resistor R7 and outputted to the switching element SW1 as a control signal Vb.

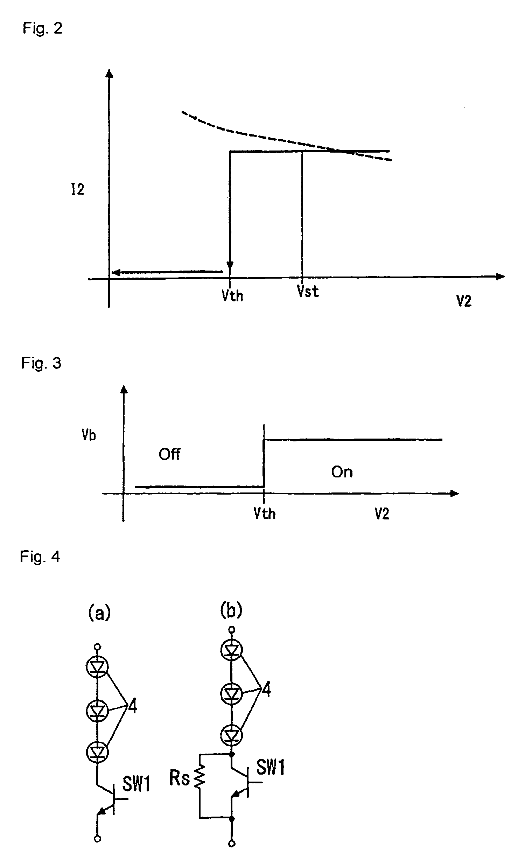

Explained next is a determination operation by the output voltage determination part 3 in the lighting device according to the present conventional embodiment. Fig. 2 shows one example of current/voltage characteristics in the lighting device according to the present conventional embodiment by using a solid line (a) where a voltage obtained in a normal lighting state of the LED 4 is equal to or more than Vst, V2 corresponds to a voltage between both ends of the LED 4, and I2 corresponds to a current flowing into the LED 4. Fig. 2 also shows, as a reference example shown by a broken line (b), a part of the current/voltage characteristics of the LED 4 observed in the configuration of the lighting device shown in Fig. 19 for comparison. In the present conventional embodiment, the current I2 is constant if the LED4 is subjected to a constant current driving control. However, once the LED 4 is short-circuited, the voltage V2 between both ends of the LED 4 starts decreasing. When the voltage V2 between both ends of the LED 4 becomes lower than the voltage Vst which preferably allows lighting of the LED4 as a normal state of the voltage V2 between both ends of the LED 4 and reaches a threshold voltage Vth (corresponding to a predetermined value defined for short circuit determination for the LED 4) or less, the output voltage determination part 3 determines that the LED 4 is short-circuited, followed by controlling the switching element SW1 to cut off a current supplied to the LED 4, whereby the current I2 reaches zero at the threshold voltage Vth.

That is, the output voltage determination part 3 uses the comparator CP1 to compare a voltage detected by the voltage detection means which is capable of detecting the voltage V2 between both ends of the LED 4, to a predetermined value defined for short circuit determination for the LED 4 in a range lower than the voltage Vst corresponding to a normal lighting state of the LED 4. If a voltage detected by the voltage detection means is equal to or less than a predetermined value, the output voltage determination part 3 determines that the LED 4 is short-circuited and the control signal Vb outputted from the comparator CP1 to the switching element SW1 exhibits an L level.

In accordance with the change of the control signal Vb, the switching element SW1 is turned off from being turned on so as to stop the current I2 flowing into the LED 4. Therefore, an overcurrent is not continuously made to flow into the LED 4 which is short-circuited, preventing the LED 4 from being damaged resulting from a short circuit of the LED 4.

Fig. 3 exemplifies a state of turning on/off the switching element SW1 with respect to the control signal Vb sent from the output voltage determination part 3 and the voltage V2 between both ends of the LED 4. Here, if the voltage V2 between both ends of the LED 4 in a normal state is higher than the threshold voltage Vth of the LED 4, the control signal Vb outputted from the output voltage determination part 3 exhibits an H level to maintain the switching element SW1 to be turned on.

In contrast, once the LED 4 is short-circuited due to some fault in the LED 4, and if the voltage V2 between both ends of the LED 4 is decreased to fall in the threshold voltage Vth of the LED 4 or less, the output voltage determination part 3 determines that the LED 4 has a short circuit fault, wherein the control signal Vb outputted from the output voltage determination part 3 to the switching element SW1 exhibits an L level. Therefore, the switching element SW1 is turned off at the threshold voltage Vth or less.

Note that the present conventional embodiment exemplifies that one LED 4 serves as a load, but a plurality of LEDs 4 may also be used in serial connection and parallel connection or multiple connections in series and parallel, though it may be needless to say. The threshold voltage Vth in this case varies depending on a characteristic of the LEDs 4, but can be defined based on a value of the forward direction voltage Vf of one of the LEDs 4. Connection between the LEDs 4 and the LED current restriction part may also be realized, for example, as shown in Fig. 4a wherein a plurality of the LEDs 4 is connected in series to the switching element SW1 serving as the LED current restriction part, or alternatively as shown in Fig. 4b wherein the LED current restriction part including the switching element SW1 and a current limiting resistor Rs connected in parallel with the switching element SW is provided to be connected with a plurality of the LEDs 4 in series.

In the case of Fig. 4b, even if partial LEDs out of the plurality of the LEDs 4 have a short circuit fault with the switching element SW1 turned off, a current flowing into the LED 4 is restricted by the current limiting resistor Rs and the remaining normal LEDs are continuously lighted with a less current. It is therefore possible to avoid not lighting the entire LEDs 4 while showing the LEDs 4 are partially short-circuited. The configuration to light the LEDs 4, the method to connect the LEDs 4, and the number of the LEDs 4 as stated above can be appropriately established as needed.

A predetermined value defined for short circuit determination for the LED 4 preferably corresponds to a value in a range from 1/3 times to 5/9 times the voltage V2 between both ends of the LED 4 in a normal state, though depending on materials used for the LED chip. A voltage lower than 1/3 times the voltage V2 between both ends thereof in a normal state will result in a longer period of time for an overcurrent to flow into the LED 4 which is short circuited, whereas a voltage higher than 5/9 times the voltage V2 between both ends thereof in a normal state will result in a larger variation of the voltage V2 between both ends of the LED 4 due to deterioration of the LED 4 with the elapse of time and manufacturing variations among the LEDs 4, leaving a possibility of causing the output voltage determination part 3 to malfunction. In the case of an LED chip with a high output using GaN-based materials in which a driving current is in a range from several hundreds mA to several A, the forward direction voltage Vf of the LED 4 (i.e. voltage V2 between both ends thereof) usually is in a range from 3.2V to 3.6V, so that the threshold voltage Vth of the LED 4 is preferably defined in a range from, for example, 1.0V to 2.0V.

Although the DC/DC converter 2 is exemplified as the current control means in the present conventional embodiment, various kinds of the current control means may also be selected depending on the specification of the power source and the LED 4 as long as the LED 4 can be lighted by controlling a current supplied from a power source such as the DC power source 1 to the LED 4. The current control means may also be, for example, simply a current limiting resistor and/or various kinds of converters including step-up, step-down and step-up/step-down converters.

In compensation for the aforementioned self-heating of the LED, the present conventional embodiment may also include a feedback control preferably performed for an output from the DC/DC converter 2 so that the current I2 detected by the resistor R1 which is connected in series to the LED 4 and provided for current detection is brought into a substantially constant state.

### (Second conventional embodiment)

A lighting device according to the present conventional embodiment is configured basically in the same manner as in that shown in Fig. 1a in the first conventional embodiment except for a circuit configuration of an output voltage determination part 3.

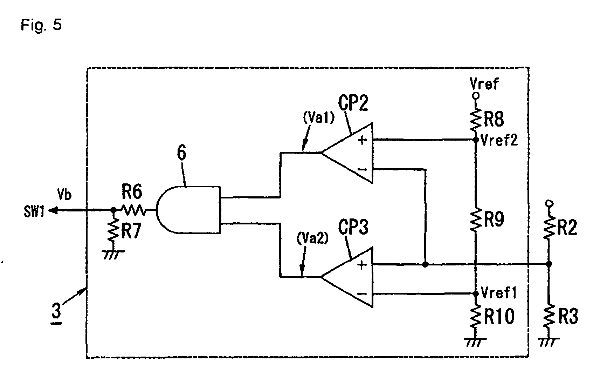

The output voltage determination part 3 in the present conventional embodiment, as shown in Fig. 5, has two of comparators CP2 and CP3 and an AND element 6, wherein the comparators CP2 and CP3 are connected such that a voltage detected by voltage dividing resistors R2 and R3 serving as voltage detection means is inputted to an inverted input terminal of the comparator C2 as one of the two comparators and a non-inverted input terminal of the other comparator C3, respectively. A reference voltage Vref is divided by resistors R8, R9 and R10 with such connections that a divided voltage Vref 2 is inputted to a non-inverted input terminal of the comparator C2 as the above one of the comparators and a divided voltage Vref 1 is inputted to an inverted input terminal of the other comparator CP3. Connected to an input terminal of the AND element 6 are respective output terminals of the comparators CP2 and CP3. An output terminal of the AND element 6 is connected to a voltage dividing resistor R6 and a voltage dividing resistor R7, whereby a voltage divided in the AND element 6 is outputted to the switching element SW1 as the control signal Vb.

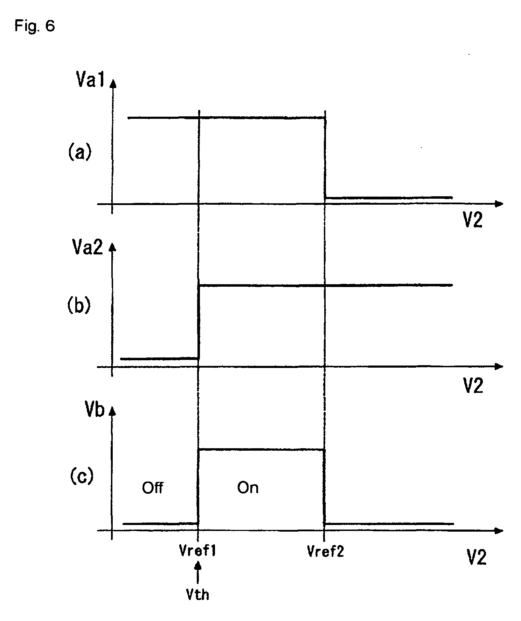

Explained next referring to Fig. 6 is an operation of the output voltage determination part 3 in the present conventional embodiment. Fig. 6 shows an output voltage V2 between both ends of the LED 4 along with output signals Va1 and Va2 obtained in the comparators CP2 and CP3, respectively, and a control signal Vb (refer to Fig. 5). Fig. 6a shows an output signal Va1 of the comparator CP2, Fig. 6b shows an output signal Va2 of the comparator CP3, and Fig. 6c shows a control signal Vb outputted via the AND element 6.

The voltage Vref2, serving as an upper limit value defined for a voltage applied to the LED 4 is inputted to the non-inverted input terminal of the comparator CP2, and if a voltage which is detected by the voltage detection means and inputted to the inverted input terminal thereof is equal to or less than the voltage Vref2, the comparator CP2 provides the output signal Va1 in the H level. In contrast, the comparator CP2 provides the output signal Va1 in the L level if the voltage Vref2 serving as an upper limit value defined for a voltage applied to the LED 4 is larger than a voltage detected by the voltage detection means (refer to Fig. 6a).

Also, if a voltage which is detected by the voltage detection means and inputted to the non-inverted input terminal of the comparator CP3 is larger than the voltage Vref1 which is connected to the inverted input terminal thereof and serves as a predetermined value defined in advance for short circuit determination for the LED 4, the comparator CP3 provides the output signal Va2 in the H level. In contrast, the comparator CP3 provides the output signal Va2 in the L level if a voltage detected by the voltage detection means is equal to or less than the voltage Vref1 serving as a predetermined value defined in advance for short circuit determination for the LED 4 (refer to Fig. 6b).

Therefore, the voltage Vref1 serves as the threshold voltage Vth corresponding to the predetermined value defined for short circuit determination for the LED 4. If both of the output signals Va1 and Va2 provided from the comparators CP2 and CP3, respectively, are both in the H level, the control signal Vb outputted from the AND element 6 is brought into the H level, whereas if either one of the output signal Va1 outputted from the comparator CP2 and the output signal Va2 outputted from the comparator CP3 is in the L level, the output signal Vb outputted from the AND element 6 is brought into the L level (refer to Fig. 6c).

The lighting device according to the present conventional embodiment turns on the switching element SW1 only when the control signal Vb exhibits the H level, wherein a current is flowed into the LED 4. In contrast, when the control signal Vb is in the L level, the lighting device will turn off the switching element SW1 so that no current flows into the LED 4.

Accordingly, the output voltage determination part 3 in the present conventional embodiment has more functions than detecting only a predetermined value defined for short circuit determination for the LED 4 as shown in the first conventional embodiment in order for the switching element SW1 to restrict a current flowing into the LED 4. The lighting device in the present conventional embodiment has the output voltage determination part 3 which controls the switching element SW1 to restrict a current flowing into the LED 4 so that the LED 4 can be lighted when the voltage V2 between both ends of the LED 4 is in a predetermined voltage range. Therefore, in the lighting device according to the present conventional embodiment, the output voltage determination part 3 determines the predetermined voltage range and controls the LED current restriction part so as to restrict a current flowing into the LED 4, whereby the lighting device can be provided with higher reliability.

### (Third conventional embodiment)

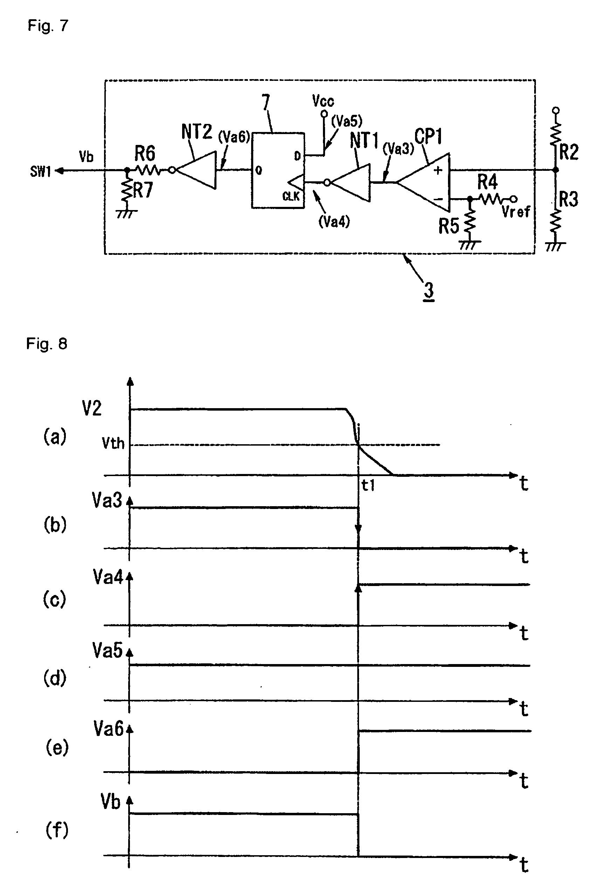

A lighting device according to the present conventional embodiment is configured basically in the same manner with the first conventional embodiment except for a configuration of an output voltage determination part 3 as shown in Fig. 7.

The output voltage determination part 3 in the present conventional embodiment is provided with connections such that a value of a voltage divided by the voltage detection means made of voltage dividing resistors R2 and R3 is inputted to a non-inverted input terminal of a comparator CP1 and a voltage obtained by dividing a reference voltage Vref by voltage dividing resistors R4 and R5 is inputted to an inverted input terminal of the comparator CP1. The comparator CP1 has an output terminal connected to an input terminal of a first inverter element NT1 whose output terminal is connected to a clock terminal (referred to as a CLK terminal hereinafter) of a D-type flip-flop element 7. The D-type flip-flop element 7 also has a data input terminal (referred to as a D terminal hereinafter) which is connected to a positive power source Vcc. An output from an output terminal (referred to as a Q terminal hereinafter) of the D-type flip-flop element 7 is inverted via a second inverter element NT2, and a voltage divided by voltage dividing resistors R6 and R7 is inputted to the switching element SW1 as a control signal Vb. Note that the first inverter element NT1 may also be preferably provided with a Schmitt circuit conducting a hysteresis operation for operation stabilization.

Explained next referring to Fig. 8 is an operation of the output voltage determination part 3 in the present conventional embodiment. Fig. 8 shows, with the elapse of time t, the voltage V2 between both ends of the LED 4, output signals Va3, Va4, Va5 and Va6 outputted from the comparator CP1, the first inverter element NT1, the positive power source Vcc, and the D-type flip-flop element 7 respectively, and the control signal Vb (refer to Fig. 7).

The voltage V2 between both ends of the LED 4 starts decreasing from a normal lighting state of the LED 4 due to a short circuit fault or other reasons, and decreases to the threshold voltage Vth of the LED 4 or less at time t1 and thereafter (refer to Fig. 8a).

In this case, the comparator CP1 compares a voltage detected by the voltage detection means to a predetermined value defined for short circuit determination for the LED 4, and if the voltage is equal to or less than a predetermined value, the output signal Va3 thereof is brought into the L level from the H level (refer to Fig. 8b).

Next, at time t1 at which the output signal Va3 of the comparator CP1 is brought into the L level, the output signal Va4 from the first inverter element NT1 is brought into the H level (refer to Fig. 8c).

On the other hand, observed in the D terminal of the D-type flip-flop element 7 is the positive power source Vcc which is constant even if the voltage V2 between both ends of the LED 4 is decreased. Thus, the output signal Va5 remains in the H level (refer to Fig. 8d).

In this case, the D-type flip-flop element 7 has the D terminal to which the output signal Va5 in the H level is inputted from the positive power source Vcc, and the CLK terminal to which the output signal Va4 in the H level is inputted from the first inverter element TN1, whereby the Q terminal outputs the output signal Va6 in the H level (refer to Fig. 8e).

The output signal Va6 from the D-type flip-flop element 7 is inverted in the second inverter element NT2, and a voltage divided by the voltage dividing resistors R6 and R7 is outputted as the control signal Vb from the output voltage determination part 3. Therefore, the switching element SW1 is changed from being turned on to being turned off at time t1 so as to cut off a current flowing into the LED 4 (refer to Fig. 8f).

Meanwhile, a voltage obtained between the output terminals of the current control means after turning off the switching element SW1 varies depending on the type of the current control means. In the present conventional embodiment, when a current flowing into the LED 4 is cut off by turning off the switching element SW1 serving as the LED current restriction part, the output voltage determination part 3 uses the voltage dividing resistors R2 and R3 to detect a voltage between the output terminals of the DC/DC converter 2 (refer to Fig. 1a). That is, after turning off the switching element SW1 by the control signal Vb sent from the output voltage determination part 3, the voltage detection means detects a voltage between the output terminals of the current control means. In this case, even if a value inputted to the output voltage determination part 3 exceeds a predetermined value corresponding to the threshold voltage Vth of the LED 4, the switching element SW1 is continuously turned off without causing a current to flow into the LED 4 because the output signal V6 from the Q terminal of the D-type flip-flop element 7 is changed only when the output signal Va4 inputted to the CLK terminal rises (or in a decrease of a voltage detected by the voltage detection means).

That is, instead of controlling the switching element SW1 to be turned on/off only by comparing the magnitude of the voltage V2 between both ends of the LED 4 to the threshold voltage Vth, a control is performed to determine how to operate the switching element SW1 in response to a signal obtained in a falling edge accompanied by a decrease of the voltage V2 between both ends of the LED 4.

In other words, in the present conventional embodiment, the switching element SW1 is turned off to stop a current flowing into the LED 4 only when the voltage V2 between both ends of the LED 4 is decreased to the threshold voltage Vth of the LED 4 or less from a normal voltage due to a short circuit fault of the LED 4 or other reasons. Even if the voltage V2 between both ends of the LED 4 is lower than the threshold voltage Vth of the LED 4, the switching element SW1 is maintained turned on to supply a current to the LED 4 when the voltage V2 between both ends thereof rises (or in rising thereof), whereby lighting of the LED 4 is maintained. Therefore, the output voltage determination part 3 controls the switching element SW1 so as to restrict a current flowing into the LED 4 by determining a short circuit of the LED 4 when a voltage detected by the voltage detection means is equal to or less than a predetermined value and the voltage is decreasing.

Note that the lighting device in the first and second conventional embodiments can also be provided with a circuit which turns off the switching element SW1 for a fixed period of time in order to prevent the output voltage determination part 3 from erroneously detecting a voltage between the output terminals of the DC/DC converter 2 as the voltage V2 between both ends of the LED 4 after turning off the switching element SW1. For example, if the LED 4 is short-circuited, the output voltage determination part 3 maintains the switching element SW1 to be turned off until the above fixed period of time (i.e. several tens msec) is passed after a voltage detected by the voltage detection means decreases to a predetermined value or less. Driving of the DC/DC converter 2 itself shall be stopped by thus turning off the switching element SW1 for a fixed period of time. Alternatively, the problem of malfunctions can also be resolved by separately arranging a function to maintain the switching element SW1 turned off once it is turned off.

### (Fourth conventional embodiment)

A lighting device according to the present conventional embodiment has current control means including a DC-DC converter 2 using a flyback transformer.

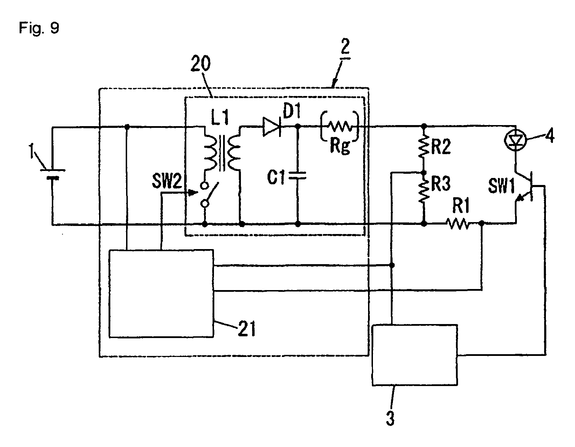

As shown concretely in Fig. 9, connected in series between output terminals of the DC/DC converter 2 serving as the current control means connected to a DC power source 1 an LED 4, a switching element SW1 serving as an LED current restriction part, and a resistor R1 for current detection, thereby providing a configuration to allow a current supply to the LED 4. The LED 4, the switching element SW1 and the resistor R1, which are connected in series with each other, are connected in parallel with voltage dividing resistors R2 and R3 serving as voltage detection means, wherein a voltage detected by the voltage detection means is inputted to an output voltage determination part 3.

Here, the DC/DC converter 2 includes a step-up part 20 and a control part 21 for controlling the step-up part 20, wherein a pulse signal is inputted from the control part 21 to a transformer L1 in the step-up part 20, using a flyback transformer which is capable of creating positive/negative voltages by mutual induction. The step-up part 20 in the DC/DC converter 2 has a switching element SW2 for control which is connected in series with a primary winding of the transformer L1 connected to the DC power source 1. The above transformer L1 has a secondary winding connected in series with a diode D1 and a current limiting resistor Rg which constitute the step-up part 20 and are connected in series with the LED 4, the switching element SW1, and the resistor R1. Also arranged in the secondary winding of the transformer L1 is a capacitor C1 which is disposed between the diode D1 and the current limiting resistor Rg and connected in parallel with the LED 4, the switching element SW1, and the resistor R1.

In the present conventional embodiment, the control part 21 for controlling the step-up part 20 is incorporated in the current control means, and the control part 21 receives a current of the LED 4 detected by the resistor R1 and a voltage detected by the voltage detection means made of the voltage dividing resistors R2 and R3. The control part 21 controls the step-up part 20 on the basis of these current and voltage in the LED 4.

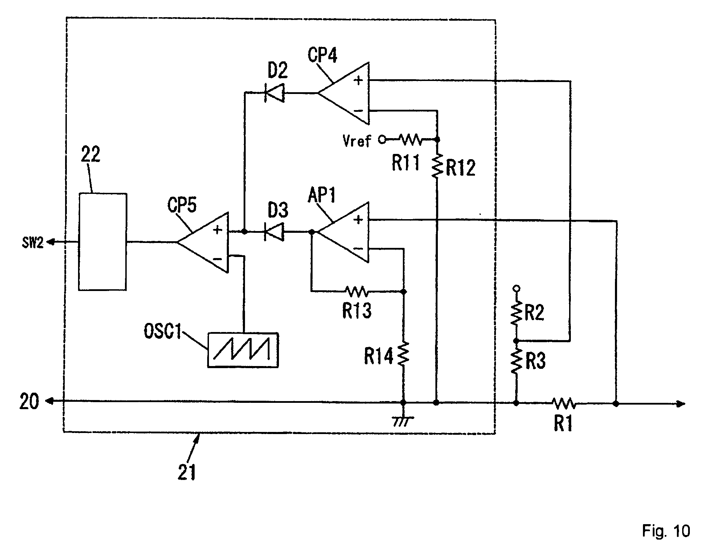

The control part 21 is as shown in Fig. 10, including two of comparators CP4 and CP5, an amplifier AP1, an oscillator part OSC1, a driver circuit 22, or other components. The comparator CP4 in the control part 21 is provided with connections such that a voltage detected by the voltage detection means (made of the voltage dividing resistors R2 and R3) is inputted to a non-inverted input terminal thereof and a voltage obtained by dividing a reference voltage Vref by voltage dividing resistors R11 and R12 is inputted to an inverted input terminal thereof. The amplifier AP1 has a non-inverted input terminal connected to the resistor R1 and an inverted input terminal connected to one end of a resistor 14 whose other end is grounded and one end of a resistor 13 whose other end is connected to an output terminal of the amplifier AP1. An output from the comparator CP4 and an output from the amplifier AP1 are connected and inputted to a non-inverted input terminal of the comparator CP5 for pulse width control via a diode D2 and a diode D3, respectively. The comparator CP5 for pulse width control also has an inverted input terminal which is connected to an output of the oscillator OSC1. Connected to an output terminal of the comparator CP5 for pulse width control is the switching element SW2 in the step-up part 20 via the driver circuit 22 so as to control the switching element SW2.

If a voltage which is detected by the voltage detection means (made of the voltage dividing resistors R2 and R3) and inputted to the comparator CP4 is lower than a predetermined voltage value obtained by dividing the reference voltage Vref by voltage dividing resistors R11 and R12 , the comparator CP5 for pulse width control in the control part 21 causes the amplifier AP1 to amplify a current flowing into the LED 4 and detected by the resistor R1, and compares the current to a high frequency triangular wave sent from the oscillator part OSC1 to realize synchronization with a high frequency outputted from the oscillator part OSC1, thereby outputting an output signal with an output pulse width corresponding to a current flowing into the LED 4. That is, the comparator CP5 for pulse width control provides a pulse width controlled (referred to as PWM hereinafter) signal whose pulse width is narrowed when a current flowing into the LED 4 is increased and whose pulse width is expanded when a current flowing into the LED 4 is reduced.

The PWM signal outputted from the comparator CP5 for pulse width control is inputted to the driver circuit 22 so as to control a period of ON-time of the switching element SW2 arranged in the primary winding of the step-up part 20, thereby changing an output from the step-up part 20 so as to perform a constant current control for the LED 4. Moreover, if a voltage which is detected by the voltage detection means and inputted to the comparator CP4 is higher than a value obtained by dividing the reference voltage Vref by the voltage dividing resistors R11 and R12, the comparator CP4 exhibits the H level, whereby a pulse width of the PWM signal outputted from the comparator CP5 for pulse width control is made narrower in accordance with a signal outputted from the comparator CP4. Therefore, if a voltage outputted from the step-up part 20 is equal to or higher than a predetermined value, the PWM signal is also used via the driver circuit 22 to control the step-up part 20 to suppress an output.

Note that the output voltage detection part 3 may have a configuration similar to that shown in Fig. 1b in the first conventional embodiment, and the lighting device is capable of preventing the LED 4 from being damaged when the LED 4 is short-circuited. Also note that the current limiting resistor Rg shown in Fig. 9 is a resistor preferably used for rush current suppression. The current limiting resistor Rg, which is effective to reduce a rush current or other currents flowing into the LED 4 when the power source is turned on, is capable of reducing a resistance value when the LED 4 has a large current withstand, but may also be omitted. Note that, in the present conventional embodiment, a plurality of the LEDs 4 connected in series with each other may also be used as shown in Fig. 4, though it may be needless to say.

### (Fifth conventional embodiment)

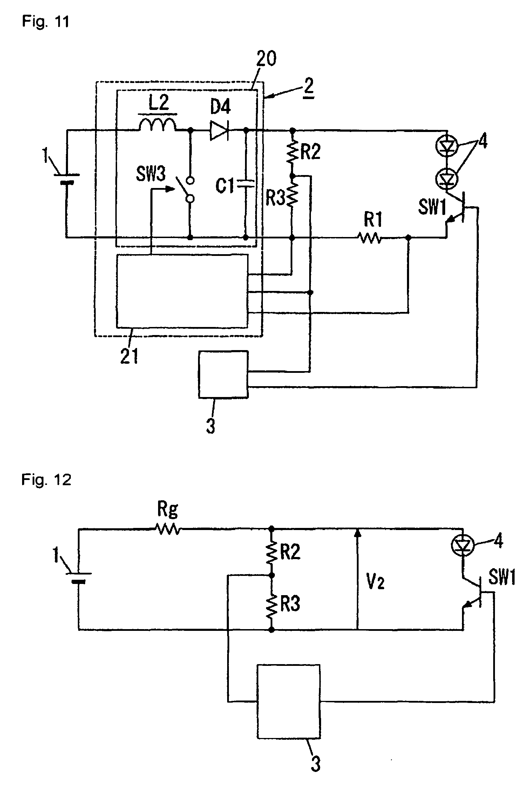

A lighting device according to the present conventional embodiment is configured in the same manner as in the fourth conventional embodiment except for using a step-up chopper circuit shown in Fig. 11 as a DC/DC converter 2 in place of the flyback transformer in the fourth conventional embodiment.

Connected in series between the output ends of the DC/DC converter 2 serving as a current control means connected to a DC power source 1 are two of LEDs 4, a switching element SW1 serving as an LED current restriction part, and a resistor R1 for current detection, so as to provide a configuration to allow a current supply to the LED 4. The LEDs 4, the switching element SW1 and the resistor R1, which are connected in series with each other, are connected in parallel with voltage dividing resistors R2 and R3 serving as voltage detection means, and a voltage detected by the voltage detection means is inputted to an output voltage determination part 3. The DC/DC converter 2 is a step-up chopper circuit including a step-up part 20 and a control part 21 for controlling the step-up part 20.

The step-up part 20 in the DC/DC converter 2 includes an inductance element L2, a diode D4, a capacitor C1 and a switching element SW3. Connected between both ends of the capacitor C1 in the step-up part 20 is a series circuit made of two of the LEDs 4, the switching element SW1 serving as the LED current restriction part, and the resistor R1. The inductance element L2 and the diode D4 in the step-up part 20 are connected in series with two of the LEDs 4, the switching element SW1, and the resistor R1 for current detection. The switching element SW3 in the step-up part 20 is connected in parallel with the capacitor C1 at a connection point between the inductance element L2 and the diode D4.

The control part 21 controls the switching element SW3 in the step-up part 20 by the control signal Vb sent from the control part 21, whereby the LED 4 is subjected to a constant current control.

The output voltage detection part 3 may also have a configuration similar to that shown in Fig. 1b in the first conventional embodiment, and the lighting device is capable of preventing the LED 4 from being damaged when the LED 4 is short-circuited in the same manner as in the fourth conventional embodiment.

### (Sixth conventional embodiment)

A lighting device according to the present conventional embodiment is configured in the same manner as in the first conventional embodiment except for using a current limiting resistor Rg as current control means adapted to restrict a current flowing into the LED 4.

As shown in Fig. 12, an LED 4, a switching element SW1, and a resistor R1 are connected in series with each other so as to supply a current sent from a DC power source 1 to the LED 4 via the current limiting element Rg. The LED 4, the switching element SW1, and the resistor R1, which are connected in series with each other, are connected in parallel with voltage detection means made of voltage dividing resistors R2 and R3. A connection point between the voltage dividing resistors R2 and R3 is connected to an output voltage determination part 3 so as to receive a divided voltage value. The output voltage determination part 3 is connected to the switching element SW1 which is connected in series with the LED 4, wherein a control signal Vb sent from the output voltage determination part 3 is used to control the switching element SW1 so as to reduce a current supplied to the LED 4 when the LED 4 is short-circuited.

Note that the output voltage determination part 3 in the present conventional embodiment has a configuration similar to that shown in Fig. 1b, and the lighting device is capable of preventing the LED 4 from being damaged when the LED 4 is short-circuited in the same manner as in the other conventional embodiments.

### (Seventh conventional embodiment)

The present conventional embodiment restricts a current flowing into an LED 4 by an LED current restriction part 5 using a switching element in a DC/DC converter 2, in place of restricting a current flowing into the LED 4 by using the switching element SW1 connected in series with the LED 4 as shown in the first conventional embodiment.

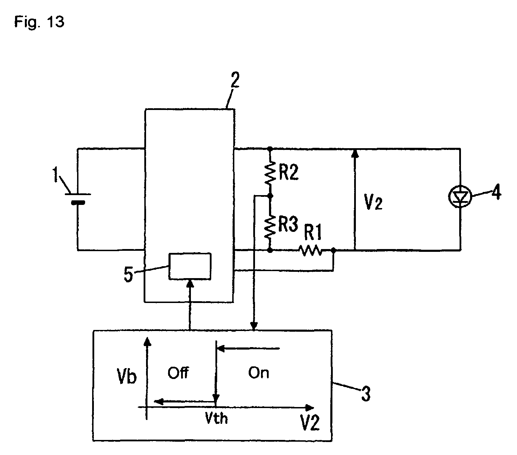

The present conventional embodiment is basically configured, as shown in Fig. 13, to light the LED 4 by supplying a current sent from the DC/DC converter 2, which is connected to the DC power source 1, to the LED 4. A series circuit made of the LED 4 and a resistor R1 preferably arranged for current detection is connected in parallel with a series circuit made of voltage dividing resistors R2 and R3 serving as voltage detection means, and a voltage detected by the voltage detection means is inputted to the output voltage determination part 3. Based on a control signal Vb sent from an output voltage determination part 3, a current supplied from the DC/DC converter 2 serving as the current control means to the LED 4 is restricted.

The output voltage determination part 3 outputs the control signal Vb in the L level if a voltage detected by the voltage detection means is equal to or less than a predetermined value defined for LED short circuit determination (i.e. threshold voltage Vth of LED 4). The DC/DC converter 2 stops the LED current restriction part 5 incorporated therein in accordance with the above control signal Vb provided in the L level, thereby stopping driving of the DC/DC converter 2.

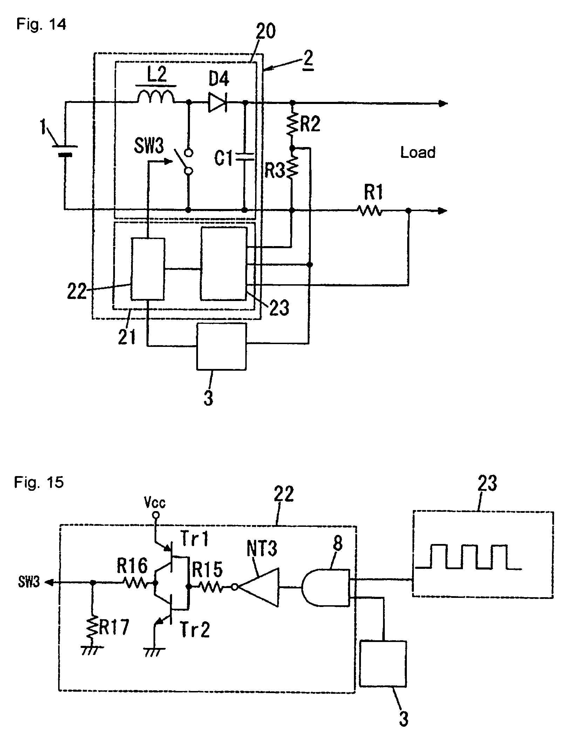

More specifically, the DC/DC converter 2 serving as the current control means in the present conventional embodiment is made of a step-up part 20 and a control part 21 for controlling the step-up part 20 as shown in Fig. 14, wherein the step-up part 20 uses a step-up chopper circuit and the control part 21 is made of a driver circuit 22 and a main control circuit 23. The main control circuit 23 is configured to receive a current flowing into the LED 4 from the resistor R1 connected in series with the LED 4, and also a voltage detected by the voltage detection means (made of the voltage dividing resistors R2 and R3) connected in parallel with the LED 4. Note that the main control circuit 23 can be configured by a general circuit capable of generating a PWM signal.

There is also a configuration provided such that a voltage detected by the voltage detection means (made of the voltage dividing resistors R2 and R3) is similarly inputted to the output voltage determination part 3, while an output from the output voltage determination part 3 and an output from the above main control circuit 23 are inputted to the driver circuit 22. The driver circuit 22 controls turning-on/off of a switching element SW3 in the step-up part 20, whereby a current flowing into the LED 4 serving as a load is controlled. Note that the switching element SW3 can be included a bipolar transistor, MOSFET or other components.

Here, the driver circuit 22 which controls the switching element SW3 incorporated in the DC/DC converter 2 is as shown in Fig. 15, wherein an AND element 8, an inverter element NT3, a resistor R15 are connected in series with each other, and the serially connected resistor R15 is connected to respective bases of two of transistors Tr1 and Tr2. The transistor Tr1 includes a pnp-type transistor, and the transistor Tr2 includes an npn-type transistor. The transistor Tr1 has a collector connected to a positive power source Vcc and an emitter connected to a collector of the transistor Tr2 and one end of a voltage dividing resistor R16. One end of a voltage dividing resistor R17 and an emitter of the transistor Tr2 are grounded. A configuration is provided in such that a signal divided by voltage dividing resistors R16 and R17 is outputted to the switching element SW3 in the step-up part 20.

In response to the PWM signal from the main control circuit 23 and a signal outputted from the output voltage determination part 3, the AND element 8 causes the transistors Tr1 and Tr2 to control driving of the switching element SW3. Therefore, if a voltage detected by the voltage detection means is higher than the threshold voltage Vth, a signal in the H level is inputted from the output voltage determination part 3 to the AND element 8. Also, in order to subject the LED 4 to a constant current drive, the PWM signal inputted form the main control circuit 23 to the AND element 8 is inverted by the inverter element NT3, and this inverted signal is inputted to the respective bases of the transistors Tr1 and Tr2, whereby the switching element SW3 in the step-up part 20 using the step-up chopper circuit is subjected to a driving control. Here, if a voltage detected by the voltage detection means is equal to or less than the threshold voltage Vth and the output voltage determination part 3 outputs a signal in the L level, the signal is inverted by the inverter element NT3 and outputted to the respective bases of the transistors Tr1 and TR2 via the resistor R15. Therefore, the transistor Tr2 is turned on to bring the control signal into the L level, so that the switching element SW3 in the step-up part 20 stops operating. Accordingly, no current is supplied to the LED 4.

Note that though one LED 4 is used in the present conventional embodiment, a plurality of LEDs may also be used. In this case, a higher voltage than a voltage of the DC power source 1 with a low output can be generated, so that the lighting device with large power can be provided to allow a larger number of the LEDs 4 to be connected in series.

### (Embodiment according to the invention)

A lighting device according to the present inventive embodiment is configured to include two of LED current restriction parts so as to restrict a current flowing into an LED 4 by using both of the LED current restriction parts. One of the LED current restriction parts includes a switching element SW1 connected in series with the LED 4 and a current limiting resistor Rs connected in parallel with the switching element SW1. The other LED current restriction part includes a DC/DC converter 2 with current control means which controls a current flowing into the LED 4 by using a switching element SW3 in the same manner as in the seventh conventional embodiment, wherein the switching element SW3 in the DC/DC converter 2 is utilized.

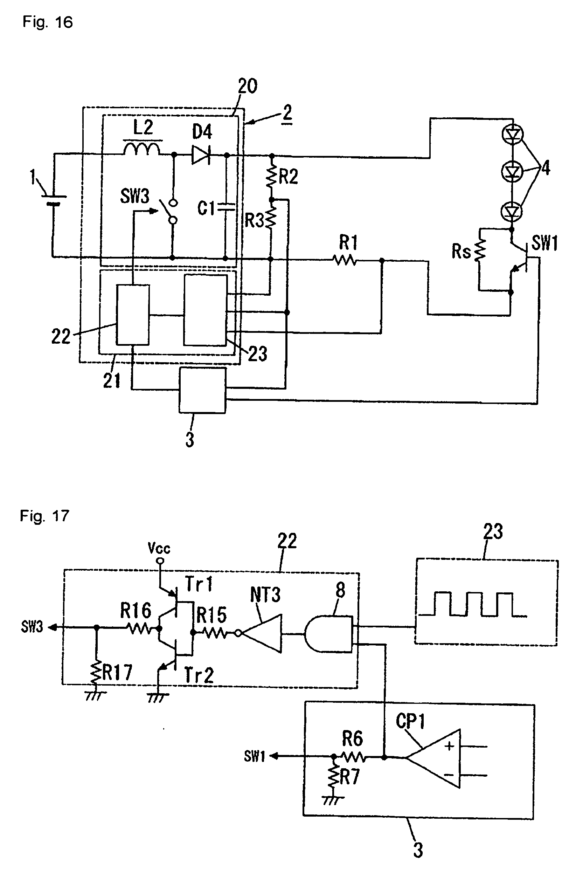

More specifically, the lighting device in the present inventive embodiment is as shown in Fig. 16, including the DC/DC converter 2 for controlling a current supplied from a DC power source 1 to the LEDs 4. Connected in series between output ends of the DC/DC converter 2 are three of LEDs 4, the above one of the LED current restriction parts, and a resistor R1 for current detection by which a current flowing into the LED 4 is detected, wherein the above one of the LED current restriction parts includes the switching element SW1 and the current limiting resistor Rs connected in parallel with the switching element SW1. A series circuit made of the LEDs 4, the above one of the LED current restriction parts and the resistor R1 is connected in parallel with voltage detection means made of voltage dividing resistors R2 and R3. A voltage detected by the voltage detection means is inputted to an output voltage determination part 3.

The DC/DC converter 2 includes a step-up part 20 and a control part 21 for controlling the step-up part 20, wherein the control part 21 includes a driver circuit 22 and a main control circuit 23.

The output voltage determination part 3 has two outputs including one outputted to the above one of the LED current restriction parts and the other one outputted to the driver circuit 22 in the DC/DC converter 2.

A configuration is provided such that the switching element SW1 in the above one of the LED current restriction parts is controlled to be turned on/off on the basis of an output from the output voltage determination part 3, and the driver circuit 22 controls the switching element SW3 in the step-up part 20 serving as the other LED current restriction part to be turned on/off on the basis of an output from the output voltage determination part 3. Note that the driver circuit 22 has a configuration similar to the driver circuit in the seventh conventional embodiment.

Also, the output voltage determination part 3 includes a comparator CP1 and voltage dividing resistors R6 and R7 connected to an output of the comparator CP1 as shown in Fig. 17, wherein the voltage resistor R7 has one end, which is not connected to the voltage dividing resistor R6, grounded. The comparator CP1 has a non-inverted input terminal to which a voltage detected by the voltage detection means is inputted, and an inverted input terminal to which a predetermined value defined for short circuit determination for the LED 4 is inputted (not shown). The comparator CP1 is configured to output a signal to the driver circuit 22 and to, via the voltage dividing resistors R6 and R7 for dividing the signal, the switching element SW1 serving as the LED current restriction part.

Explained next is an operation in the present inventive embodiment. The AND element 8 receives a PWM signal from the main control circuit 23 and a signal outputted from the output voltage determination part 3, followed by driving of the switching element SW3. Therefore, if a voltage detected by the voltage detection means is higher than a predetermined value defined for short circuit determination for the LED 4, a signal in the H level is inputted from the output voltage determination part 3 to the AND element 8. Moreover, in order to subject the LED 4 to a constant current drive, the PWM signal inputted from the main control circuit 23 to the AND element 8 is inverted by an inverter element NT3, and this inverted signal is inputted to respective bases of transistors Tr1 and Tr2 to perform a driving control for the switching element SW3 in the DC/DC converter 2 using a step-up chopper circuit. Here, if the LED 4 is short-circuited and a voltage detected by the voltage detection means is equal to or less than a predetermined value defined for short circuit determination for the LED 4, the output voltage determination part 3 outputs a signal in the L level which is inverted by the inverter element NT3, followed by input of the signal to the respective bases of the transistors Tr1 and Tr2 via a resistor R15. Therefore, the transistor Tr2 is turned on to bring the output signal into the L level, whereby the switching element SW3 serving as the above other LED current restriction part in the step-up part 20 stops operating. The output voltage determination part 3 similarly controls the remaining LED current restriction part to restrict a current flowing into the LED 4.

Therefore, a current flowing into the LED 4 can be restricted by both the switching element SW1 connected in series with the LEDs 4 and the switching element SW3 arranged in the current control means, thereby making it possible to prevent the LED 4 from being damaged while protecting the lighting device when the LED 4 is short-circuited.

Note that the present invention may also use, as a system of the current control means, a step-down chopper control or a forward-type converter by which any voltages and currents are spuriously created as an effective value from an AC power source through repeatedly turning on/off a current. The control circuit may also be configured by using a micro computer or other means for PWM control, thought it may be needless to say.

### [Brief Description of the Drawings]

[Fig. 1] Fig. 1 shows a lighting device according to the prior art, where Fig. 1a is a schematic circuit diagram, and Fig. 1b is a main circuit diagram.
[Fig. 2] Fig. 2 is an operation explanatory diagram according to the device of Fig. 1.
[Fig. 3] Fig. 3 is an operation explanatory diagram according to the device of Fig. 1.
[Fig. 4] Fig. 4 is an explanatory diagram showing another example of a configuration of a main part according to the device of Fig. 1.
[Fig. 5] Fig. 5 is a circuit diagram of a main part in a lighting device according to the prior art.
[Fig. 6] Fig. 6 is an operation explanatory diagram showing an output voltage determination part according to the device of Fig. 5.
[Fig. 7] Fig. 7 is a circuit diagram of a main part in a lighting device according to the prior art.
[Fig. 8] Fig. 8 is an operation explanatory diagram according to the device of Fig. 8.
[Fig. 9] Fig. 9 is a circuit diagram showing a lighting device according to the prior art.
[Fig. 10] Fig. 10 is a circuit diagram of a main part in the lighting device according to the device of Fig. 9.
[Fig. 11] Fig. 11 is a circuit diagram showing a lighting device according to the prior art.
[Fig. 12] Fig. 12 is a circuit diagram showing a lighting device according to the prior art.
[Fig. 13] Fig. 13 is a circuit diagram showing a lighting device according to the prior art.
[Fig. 14] Fig. 14 is a circuit diagram of a main part in the lighting device according to the device of Fig. 13.
[Fig. 15] Fig. 15 is a circuit diagram of a main part in the lighting device according to the device of Fig. 13.
[Fig. 16] Fig. 16 is a circuit diagram showing a lighting device according to an embodiment of the invention.
[Fig. 17] Fig. 17 is a circuit diagram of a main part in the lighting device according to the embodiment of Fig. 16.
[Fig. 18] Fig. 18 is a circuit diagram showing a conventional lighting device.
[Fig. 19] Fig. 19 is a current/voltage characteristic diagram according to the conventional lighting device.
[Fig. 20] Fig. 20 is an output characteristic diagram of a conventional power conversion device.
[Fig. 21]Fig. 21 is an output characteristic diagram of a power conversion device for reference.

### [Description of Reference Numerals]

- 1.: DC power source (power source)
- 2.: DC/DC converter (current control means)
- 3.: Output voltage determination part
- 4.: LED
- SW1.: Switching element (LED current restriction part)
- Rs.: Current limiting resistor

### Fig. 1

- 1.: DC power source (power source)
- 2.: DC/DC converter (current control means)
- 3.: Output voltage determination part
- 4.: Switching element (LED current restriction part)

### Fig. 3

- 1.: Off
- 2.: On

### Fig. 6

- 1.: Off
- 2.: On

### Fig. 13

- 1.: Off
- 2.: On

### Fig. 14

- 1.: Load

### Fig. 20

- 1.: Output voltage
- 2.: Output current

### Fig. 21

- 1.: Output current
- 2.: Short circuit fault in LED
- 3.: Output voltage

## Claims

1. A lighting device provided with current control means adapted to control a current supplied from a power source (1) to an LED (4), the lighting device comprising:
voltage detection means (R2, R3) capable of detecting a voltage between both ends of the LED (4); an LED current restriction part (SW1, Rs) capable of restricting a current flowing into the LED (4) wherein the LED current restriction part is defined by a switching element (Sw1) connected in series between the power source (1) and a current limiting resistor (Rs) connected in parallel with the switching element (SW1); and
an output voltage determination part (3) for controlling the LED current restriction part (SW1, Rs) so as to restrict a current flowing into the LED (4) upon determination that a voltage detected by the voltage detection means (R2, R3) is equal to or less than a predetermined value (Vth) defined for determination of a short circuit in the LED (4).

2. The lighting device according to claim 1 , wherein the predetermined value (Vth) corresponds to a value in a range from 1/3 times to 5/9 times a normal voltage between both ends of the LED (4).

3. The lighting device according to any one of claims 1 or 2, wherein the output voltage determination part (3) controls the LED current restriction part so as to restrict a current flowing into the LED (4) by determining a short circuit of the LED (4) when a voltage detected by the voltage detection means (R2, R3) is equal to or less than the predetermined value (Vth) and the voltage is decreasing.

4. The lighting device according to claim 1, wherein the current control means is a converter (2) to control a current supplied to the LED (4) by a switching element (SW3), and the LED current restriction part (SW1, Rs) restricts a current flowing into the LED (4) by using both the switching element (SW3) in the current control means and a switching element (SW1) connected in series between the power source (1) and the LED (4).

5. The lighting device according to any one of claims 1 to 4, wherein the power source is a DC power source (1) and the current control means is a DC/DC converter (2) using a step-up circuit (20).

6. The lighting device according to any one of claims 1 to 4, wherein the power source is a DC power source (1) and the current control means is a DC/DC converter using (2) a flyback transformer.

## Patentansprüche

1. Beleuchtungseinrichtung aufweisend Stromsteuermittel, die dazu eingerichtet sind, einen Strom der von einer Leistungsquelle (1) zu einer LED (4) geliefert wird, zu steuern, wobei die Beleuchtungseinrichtung aufweist:
Spannungserfassungsmittel (R2, R3), die dazu eingerichtet sind, eine Spannung zwischen beiden Enden der LED (4) zu erfassen; einen LED-Strombegrenzungsteil (SW1, Rs), der dazu eingerichtet ist, einen in die LED (4) fließenden Strom zu begrenzen, wobei der LED-Strombegrenzungsteil durch ein Schaltelement (SW1) gebildet ist, das in Reihe zwischen der Leistungsquelle (1) und einem Strombegrenzungswiderstand (Rs) geschaltet ist, der parallel zu dem Schaltelement (SW1) geschaltet ist; und
einen Ausgangsspannungsermittlungsteil (3) zur Steuerung des LED-Strombegrenzungsteils (SW1, Rs), um einen in die LED (4) fließenden Strom zu begrenzen, sobald ermittelt wird, dass eine durch die Spannungserfassungsmittel (R2, R3) erfasste Spannung gleich ist oder kleiner ist als ein vorgegebener Wert (Vth), der für die Ermittlung eines Kurzschlusses in der LED (4) definiert ist.

2. Beleuchtungseinrichtung nach Anspruch 1, wobei der vorgegebener Wert (Vth) einem Wert in einem Bereich von dem 1/3-fachen bis zum 5/9-fachen einer normalen Spannung zwischen den beiden Enden der LED (4) entspricht.

3. Beleuchtungseinrichtung nach irgendeinem der Ansprüche 1 oder 2, wobei der Ausgangsspannungsermittlungsteil (3) den LED-Strombegrenzungsteil derart steuert, dass ein in die LED (4) fließender Strom begrenzt wird indem ein Kurzschluss der LED (4) ermittelt wird, wenn eine durch die Spannungserfassungsmittel (R2, R3) erfasste Spannung gleich ist oder kleiner ist als der vorgegebene Wert (Vth) und die Spannung sinkt.

4. Beleuchtungseinrichtung nach Anspruch 1, bei dem das Stromsteuermittel ein Wandler (2) ist, um einen der LED (4) bereitgestellten Strom mittels eines Schaltelements (SW3) zu steuern, und der LED-Strombegrenzungsteil (SW1, Rs) einen in die LED (4) fließenden Strom durch die Verwendung sowohl des Schaltelements (SW3) in dem Stromsteuermittel als auch eines Schaltelements (SW1) begrenzt, das in Reihe zwischen der Leistungsquelle (1) und der LED (4) geschaltet ist.

5. Beleuchtungseinrichtung nach irgendeinem der Ansprüche 1-4, wobei die Leistungsquelle eine Gleichspannungsquelle (1) ist und das Stromsteuermittel ein Gleichspannungswandler (2) ist, der einen Hochsetzschaltkreis (20) verwendet.

6. Beleuchtungseinrichtung nach irgendeinem der Ansprüche 1-4, bei dem die Leistungsquelle eine Gleichspannungsquelle (1) ist und das Stromsteuermittel ein Gleichspannungswandler (2) ist, der einen Sperrwandler verwendet.

## Revendications

1. Dispositif d'éclairage muni d'un moyen de régulation de courant, adapté pour réguler un courant fourni à partir d'un bloc d'alimentation (1) à une DEL (4), le dispositif d'éclairage comprenant :
un moyen de détection de tension (R2, R3), apte à détecter une tension entre les deux extrémités de la DEL (4) ; une partie de restriction de courant de DEL (SW1, Rs), apte à restreindre un courant circulant dans la DEL (4), dans lequel la partie de restriction de courant de DEL est définie par un élément de commutation (SW1), relié en série entre le bloc d'alimentation (1) et une résistance de limitation de courant (Rs), reliée en parallèle à l'élément de commutation (SW1) et
une partie de détermination de tension de sortie (3), destinée à réguler la partie de restriction de courant de DEL (SW1, Rs), de façon à restreindre un courant circulant dans la DEL (4), lors de la détermination suivant laquelle une tension, détectée par le moyen de détection de tension (R2, R3), est inférieure ou égale à une valeur prédéterminée (Vième), définie pour la détermination d'un court-circuit dans la DEL (4).

2. Dispositif d'éclairage selon la revendication 1, dans lequel la valeur prédéterminée (V_{ième}) correspond à une valeur dans une plage d'1/3 fois à 5/9 fois une tension normale entre les deux extrémités de la DEL (4).

3. Dispositif d'éclairage selon l'une quelconque des revendications 1 ou 2, dans lequel la partie de détermination de tension de sortie (3) régule la partie de restriction de courant de DEL, de façon à restreindre un courant circulant dans la DEL (4) en déterminant un court-circuit de la DEL (4), lorsqu'une tension, détectée par le moyen de détection de tension (R2, R3), est inférieure ou égale à la valeur prédéterminée (Vième) et que la tension diminue.

4. Dispositif d'éclairage selon la revendication 1, dans lequel le moyen de régulation de courant est un convertisseur (2), pour réguler un courant, fourni à la DEL (4) par un élément de commutation (SW3) et la partie de restriction de courant de DEL (SW1, Rs) restreint un courant circulant dans la DEL (4) en utilisant à la fois l'élément de commutation (SW3) dans le moyen de régulation de courant et un élément de commutation (SW1), relié en série entre le bloc d'alimentation (1) et la DEL (4).

5. Dispositif d'éclairage selon l'une quelconque des revendications 1 à 4, dans lequel le bloc d'alimentation est un bloc d'alimentation CC (1) et le moyen de régulation de courant est un convertisseur CC/CC (2), utilisant un circuit de montage (20).

6. Dispositif d'éclairage selon l'une quelconque des revendications 1 à 4, dans lequel le bloc d'alimentation est un bloc d'alimentation CC (1) et le moyen de régulation de courant est un convertisseur CC/CC, utilisant (2) un transformateur de balayage horizontal.
